# EUROPEAN PATENT SPECIFICATION

(11) **EP 0 424 725 B1**
(45) Date of publication and mention of the grant of the patent: **28.05.1997**
(21) Application number: 90119372.2
(22) Date of filing: 10.10.1990
(51) Int. Cl.: H04N 7/087, H04N 5/76, H04N 5/782

(54) **System for the automatic recording of a television programme**
System zur automatischen Aufzeichnung eines Fernsehprogramms
Système d'enregistrement automatique d'un programme de télévision

(30) Priority: 23.10.1989 IT 6790789
(43) Date of publication of application: 02.05.1991
(73) Proprietor: EDICO S.r.l., I-00197 Roma (IT)
(72) Inventor: Dini, Roberto, Rivoli (TO) (IT); Farina, Attilio, Torino (IT)
(74) Representative: Göken, Klaus G.

(56) References cited:
- EP-A- 0 133 985
- EP-A- 0 293 492
- WO-A-91/08626
- DE-A- 3 628 964
- DE-A- 3 909 334
- DE-C- 3 424 812
- GB-A- 2 215 928
- GB-A- 2 229 595
- 5TH CONFERENCE AND EXHIBITION ON TELEVISION TECHNIQUES June 1990, BUDAPEST, HUNGARY pages 23 - 30; J.P. CHAMBERS: 'A DOMESTIC TELEVISION PROGRAMME DELIVERY SERVICE BASED ON TELETEXT'

## Description

The present invention refers to a system for the automatic recording of a television programne, by means of a videorecorder, comprising first means for receiving a television programme, a clock, a data memory, a data comparator, and means for inserting in said memory data relating to a programme to be recorded.

It is known that all videorecorders are usually provided with a clock, permanently operating, and with means for programming the recorder start-on at a determined time, on a determined television channel. Said time is normally the time foreseen for the start of the programme to be recorded; it is usually possible to program also the recording end time.

Such simple system often produces wrong recording, because the desired programme does not start at the foreseen time, but later on, so that a part of the programme gets lost, unless the end time has been programmed with plenty of time.

A system has been proposed that consists in the transmission of a label, together with each programme, containing the date, the foreseen starting time, the channel number and the foreseen ending time.

In this way the recorder starts to operate only at the actual starting time and records the whole desired programme; it is nevertheless necessary for the receiving part to be always on, or at least that it is turned on a suitable time interval before the foreseen starting time (see for example the published german patent application DE-A-33 28 001 corresponding to EP-A-0 133 985).

The object of the present invention is that of indicating a system for the automatic recording of a television programme, by means of a videorecorder, that is the simplest for the user and the most effective that is possible.

In order to achieve the said object the subject of the present invention is a system as claimed in claim 1.

The invention will now be described with reference to the attached drawings, which show an embodiment of the invention, given as a non-limiting example only.
Figure 1 shows the block diagram of a system for the automatic recording of a television programme, according to the invention;
figure 2 shows the simplified flow diagram of the operation of the system according to figure 1.

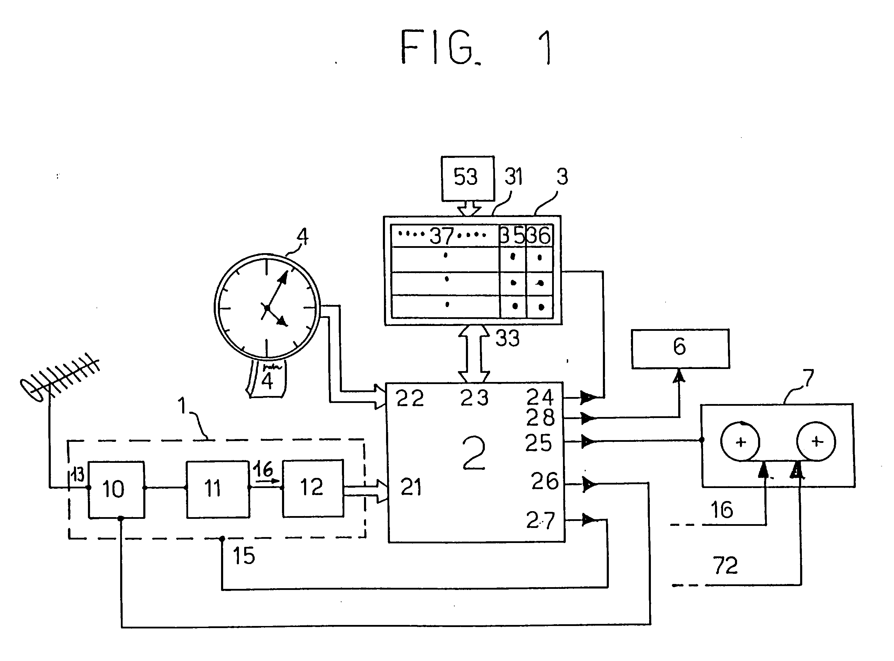

In fig. 1, which shows the block diagram of a system for the automatic recording of a television programme, according to the invention, the number 13 indicates the antenna signal input of the receiving circuits block 1 of the system.

Number 10 indicates a tuner, number 11 the intermediate frequency amplifier with detector and number 12 indicates the decoding circuit for the transmitted label, containing the code number and the signal indicative of the programme starting time.

Number 16 indicates the demodulated video signal.

Number 2 indicates a microcomputer which controls the system; it is connected to block 12 from which it receives at terminal 21 the transmitted label; it is also connected to a clock-calendar 4, through terminal 22, and to a memory 3 through terminal 23.

Memory 3 is foreseen to receive through an interface 53 the user data relating to the programme to be recorded (channel and code number of the desired programme). Interface 53 may be a numbered keyboard (for instance coupled to a remote control device) or any other device suitable to input data.

Microcomputer 2, through terminal 24, can address memory 3; through terminal 28 it can control a display 6 (e.g. to indicate the number of the selected channel); through terminal 25 it can control the start and the end of the recording by means of recorder 7; through terminal 26 it can control tuner 10 in order to select the user choosen channel; and through terminal 27 it can turn on or off the receiving part of the system (15).

Recorder 7 receives from block 11 the video and audio signals to be recorded through cables 16 and 72.

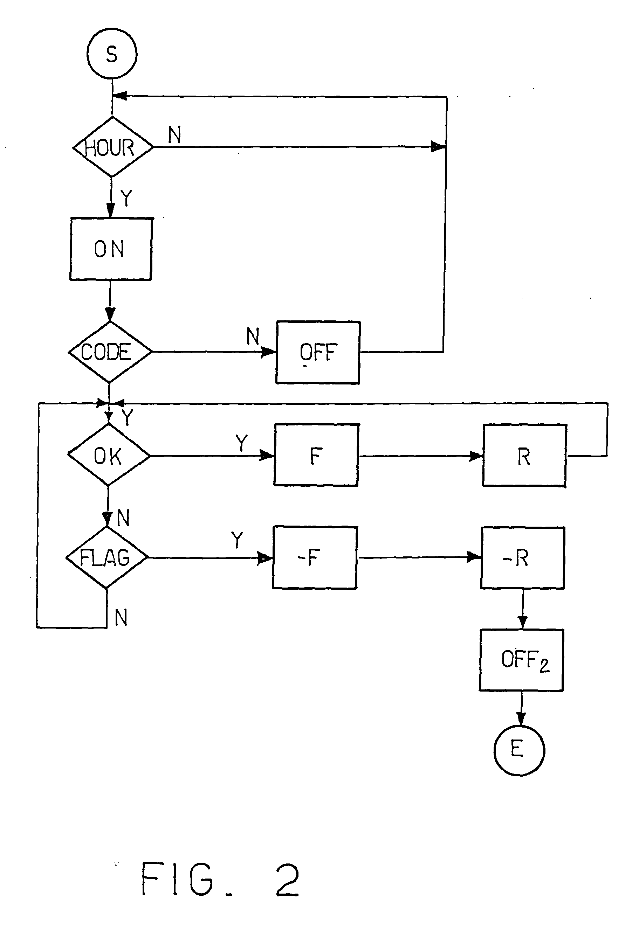

In figure 2, which shows the simplified flow diagram of the operation of the system according to figure 1, the flow starts at a block 5, which represents the beginning of the operation, in the moment when the user gives the command to record and inserts into memory 3 the relevant data of the programme to be recorded.

Block S turns on the microcomputer and passes the control to a block HOUR, which provides for reading the built-in clock 4 and for verifying if from the last performed operation an hour lapsed.

In the affirmative case (Y) the control passes to the next block ON, in the negative (N) the control goes back to the block HOUR.

Block ON provides for activating the signal receiving part (15) and passes the control to the next block CODE.

Block CODE provides for verifying if in the received label there is contained the code number stored by the user into memory 3. In the affirmative case (Y) the control goes to the next block OK, in the negative (N) the control goes to a block OFF.

Block OFF provides for disabling the receiving part 15 and the control goes back to the block HOUR.

Block OK provides for verifying if in the received label there is contained the signal indicating that the programme is being transmitted. In the affirmative case (Y) the control goes to next block F, in the negative (N) the control goes to a block FLAG.

Block F provides for storing a recording-in-action flag and the control goes to a next block R, which in turn provides for activating the recording of the programme being transmitted, and the control goes again to block OK.

Block FLAG provides for verifying if the recording-in-action flag has been already stored; in the affirmative case (Y) the control goes to the next block -F, in the negative (N) the control goes back to block OK.

Block -F provides for erasing the recording-in-action flag and the control goes to next block -R; the latter in turn provides to stop the recording operation of the recorder 7 and passes the control to the next block OFF2; this one provides for disabling the receiving part 15 and microcomputer 2 and passes the control to an end block E, which represents the end of the relevant operation.

The working of the described system is as follows.

During the transmission, for instance during a line of the frame flyback, a label is transmitted, containing the code numbers of the programme being transmitted and of all other programmes which shall begin within one hour. To the code number of the programme being transmitted there is associated a signal indicating that the programme is actually being transmitted (for instance a bit which is set); to the code numbers of the programs which will start later on there is associated a signal indicating that such programmes shall begin later on (for instance a reset bit).

As soon as the user turns the recorder on and inserts in the the channel number and the code number of the programme to be recorded (typically 2+4 decimal digits), the operation cycle shown in fig. 2 starts.

Microcomputer 2 provides for letting the tuner 10 to select the choosen channel, and for verifying if in the label received from block 12 there is contained the stored code number; if the code is not contained it turns the apparatus off and checks the matter again an hour later. If the code number is contained in the label, it verifies if there is also the signal indicating that the programme is being transmitted: if and only if such a signal is in the label the microcomputer sets the recording-in-action flag; it also starts the recording operation and waits for the resetting of the signal indicating that the transmission is on. As soon as such a signal is reset , the microcomputer turns the apparatus off and the cycle is over.

From the above description the advantages of the system for the automatic recording of a television programme according to the invention are clear.

In particular the described system allows the user to insert, beside the channel number, only a four digits number; moreover it guarantees that the desired programme and only the desired programme is recorded.

It is obvious that the person skilled in the art nay bring several variations to the system which has been described as an example, without departing from the scope of the novelty principles inherent to the present invention.

For example, it would be possible to transmit, instead of a mere on-off signal, the actual starting tire of the program, eventually updated if necessary; in this case the recorder, once the desired code number has been received, will turn the apparatus off, turning it on again for instance five minutes before the actual starting time.

## Claims

1. System for the automatic recording of a television programme, comprising:
- a videorecorder which comprises first means (15) for receiving a television programme, a clock (4), a data memory (3), a data comparator (2), and second means (53) for inserting in said memory (3) data relating to a programme to be recorded,
- a transmitting television station,
the system being adapted such that to each programme transmitted by said station there is associated a code number, that said station transmits in a suitable way said code number starting from a first predetermined time interval before the actual beginning of said programme and also transmits, coupled to said code number, a signal indicative of the actual beginning of said programme and that the videorecorder comprises third means (12) capable to extract form the received television signal the transmitted code number and said indicative signal, whereby the value of said signal indicative of the actual beginning of said programme changes with the beginning of said programme, and the video recorder is provided with fourth means (2) coupled to said clock, which can be activated in order to turn on said first means (15), said comparator and said third means at second predetermined time intervals when said code number has not been detected.

2. System for the automatic recording of a television programme, according to claim 1, characterized by the fact that said signal indicative of the beginning of the programme is a binary signal of the no-yes type, said signal being no until the actual starting of the programme and becoming yes at the moment of the starting of the programme.

3. System for the automatic recording of a television programme, according to claim 1, characterized by the fact that said signal indicative of the beginning of the programme is a signal indicating the actual programme starting time, continously updated.

4. System for the automatic recording of a television programme, according to any one of the preceding claims, characterized by the fact that each time that said third means (12) are turned on by said fourth means (2), they provide for extracting from the received signal said code number and said signal indicative of the beginning of the programme.

5. System for the automatic recording of a television programme, according to claim 4, characterized by the fact that said code number extracted from the received signal is compared by means of said comparator (2), with the code number stored in said data memory (3), and, in the case it corresponds, said fourth means (2) provide for keeping on said first (15) and said third means (12), and said comparator (2), while in the case it does not correspond, said fourth means (2) provide for turning off said first (15) and said third means (12) and said comparator (2).

6. System for the automatic recording of a television programme, according to claim 5, depending from claim 2, characterized by the fact that, in the case the code numbers correspond, said binary signal is continously checked and as soon as it passes from no to yes, the remaining part of the recorder is turned on and the recording operation of the programme starts.

7. System for the automatic recording of a television programme, according to claim 6, characterized by the fact that when the programme to be recorded is over, the code number changes, said indicative signal changes too and the videorecorder turns off.

8. System, for the autonatic recording of a television programme, according to claim 1, characterized by the fact that said predetermined first time interval 1 and said predetermined second time intervals are equal.

9. System for the automatic recording of a television programme, according to claim 8, characterized by the fact that said predetermined time intervals are one hour intervals.

10. System for the automatic recording of a television programme, according to any one of the preceding claims, characterized by the fact that said second means (53) comprise a numbered keyboard.

11. System for the automatic recording of a television programme, according to claim 1, characterized by the fact that said fourth means comprise a microcomputer (2).

12. System for the automatic recording of a television programme, according to claim 11, characterized by the fact that said microcomputer (2) also performs the data comparator function.

13. System for the automatic recording of a television programme, according to any one of the preceding claims, characterized by the fact that said second means (53) permit to store in said memory (3) a number indicative of the desired emitting station and said code number indicative of the programme to be recorded.

14. System for the automatic recording of a television programme, according to claim 13, characterized by the fact that said number indicative of the desired emitting station is a two digits decimal number and that said code number indicative of the programme to be recorded is a four digits decimal number.

## Patentansprüche

1. System zum automatischen Aufzeichnen einer Fernsehsendung, mit:
- einem Videorekorder, welcher eine erste Einrichtung (15) zum Empfangen einer Fersehsendung, eine Uhr (4), einen Datenspeicher (3), einen Daten-Komparator (2) und eine zweite Einrichtung (53) zum Einfügen von Daten, die zur aufzuzeichnenden Sendungen gehören, in den Speicher (3) aufweist,
- einer Fernseh-Sendestation,
wobei das System derart ausgebildet ist, daß jeder Sendung, die von dem Sender gesendet wird, eine Codenummer zugeordnet ist, daß der Sender in geeigneter Weise die Codenummer beginnend von einem ersten vorbestimmten Zeitintervall vor dem tatsächlichen Beginn der Sendung sendet und gekoppelt an die Codenummer ebenfalls ein Signal sendet, das den tatsächlichen Beginn der Sendung anzeigt, und daß der Videorekorder eine dritte Einrichtung (12) umfaßt, die in der Lage ist, aus dem empfangenen Fernsehsignal die gesendete Codenummer und das Anzeigesignal zu extrahieren, wobei der Wert des Signals, das den tatsächlichen Beginn der Sendung anzeigt, mit dem Beginn der Sendung wechselt, und der Videorekorder mit einer vierten Einrichtung (2) versehen ist, die an die Uhr gekoppelt ist und die aktiviert werden kann, um die erste Einrichtung (15), den Komparator und die dritte Einrichtung in zweiten, vorbestimmten Zeitintervallen einzuschalten, wenn die Codenummer nicht erfaßt wurde.

2. System zum automatischen Aufzeichnen einer Fernsehsendung nach Anspruch 1,
dadurch gekennzeichnet, daß das Signal, welches den Beginn der Sendung anzeigt, ein Binärsignal des Nein/Ja-Typs ist, wobei das Signal bis zum tatsächlichen Beginn der Sendung Nein ist und in dem Moment des Beginns der Sendung Ja wird.

3. System zum automatischen Aufzeichnen eines Fernsehprogramms nach Anspruch 1,
dadurch gekennzeichnet, daß das Signal, das den Beginn der Sendung anzeigt, ein Signal ist, daß die tatsächliche Sendungsanfangszeit anzeigt und kontinuierlich aktualisiert wird.

4. System zum automatischen Aufzeichnen einer Fernsehsendung nach einem der vorstehenden Ansprüche,
dadurch gekennzeichnet, daß jedes mal, wenn die dritte Einrichtung (12) durch die vierte Einrichtung (2) eingeschaltet wird, sie ein Extrahieren der Codenummer und des Signals, das den Beginn der Sendung anzeigt, aus dem empfangenen Signal ermöglicht.

5. System zum automatischen Aufzeichnen einer Fernsehsendung nach Anspruch 4,
dadurch gekennzeichnet, daß die aus dem empfangenen Signal extrahierte Codenummer durch den Komparator (2) mit der in dem Datenspeicher (3) gespeicherten Codenummer verglichen wird und in dem Fall, daß sie korrespondieren, die vierte Einrichtung (2) die erste (15) und die dritte Einrichtung (12) und den Komparator (2) eingeschaltet läßt, während in dem Fall, daß sie nicht korrespondieren, die vierte Einrichtung (2) die erste (15) die dritte Einrichtung (12) und den Komparator (2) abschaltet.

6. System zum automatischen Aufzeichnen einer Fernsehsendung nach Anspruch 5, abhängig von Anspruch 2,
dadurch gekennzeichnet, daß in dem Fall, daß die Codenummern korrespondieren, das Binärsignal kontinuierlich geprüft wird, und sobald es von Nein zu Ja übergeht, der verbleibende Teil des Rekorders eingeschaltet wird und der Aufzeichnungbetrieb der Sendung beginnt.

7. System zum automatischen Aufzeichnen einer Fernsehsendung nach Anspruch 6,
dadurch gekennzeichnet, daß die Codenummer wechselt, das Anzeigesignal ebenfalls wechselt und der Videorekorder abschaltet, wenn die aufzuzeichnende Sendung beendet ist.

8. System zum automatischen Aufzeichnen einer Fernsehsendung nach Anspruch 1,
dadurch gekennzeichnet, daß der vorbestimmte erste Zeitabschnitt und der vorbestimmte zweite Zeitabschnitt gleich sind.

9. System zum automatischen Aufzeichnen einer Fernsehsendung nach Anspruch 8,
dadurch gekennzeichnet, daß die vorbestimmten Zeitintervalle Ein-Stunden-Intervalle sind.

10. System zum automatischen Aufzeichnen einer Fernsehsendung nach einem der vorstehenden Ansprüche,
dadurch gekennzeichnet, daß die zweite Einrichtung (53) eine nummerierte Tastatur umfaßt.

11. System zum automatischen Aufzeichnen einer Fernsehsendung nach Anspruch 1,
dadurch gekennzeichnet, daß die vierte Einrichtung einen Mikrocomputer (2) umfaßt.

12. System zum automatischen Aufzeichnen einer Fernsehsendung nach Anspruch 11,
dadurch gekennzeichnet, daß der Mikrocomputer (2) ebenfalls die Daten-Komparator-Funktion ausführt.

13. System zum automatischen Aufzeichnen einer Fernsehsendung nach einem der vorstehenden Ansprüche,
dadurch gekennzeichnet, daß die zweite Einrichtung (53) erlaubt, in dem Speicher (3) eine Nummer zu speichern, welche die gewünschte Sendestation anzeigt, und die Codenummer, welche die aufzuzeichnende Sendung anzeigt.

14. System zum automatischen Aufzeichnen einer Fernsehsendung nach Anspruch 3,
dadurch gekennzeichnet, daß die Nummer, welche die gewünschte Sendestation anzeigt, eine zweistellige Dezimalzahl ist, und daß die Codenummer, welche die aufzuzeichnende Sendung anzeigt, eine vierstellige Dezimalzahl ist.

## Revendications

1. Système d'enregistrement automatique d'un programme de télévision comprenant :
- un magnétoscope qui comprend des premiers moyens (15) destinés à recevoir un programme de télévision, une horloge (4), une mémoire de données (3), un comparateur de données (2), et des deuxièmes moyens (53) destinés à insérer dans ladite mémoire (3) des données relatives à un programme devant être enregistré,
- une station de télévision émettrice,
le système étant adapté de telle sorte qu'à chaque programme émis par ladite station est associé un numéro de code, que ladite station émet de manière appropriée, ledit numéro de code commençant à partir d'un premier intervalle de temps prédéterminé avant le début réel dudit programme et émet également, couplé audit numéro de code, un signal indiquant le début réel dudit programme et de telle sorte que le magnétoscope comprend des troisièmes moyens (12) pouvant extraire du signal de télévision reçu le numéro de code émis et ledit signal d'indication, moyennant quoi la valeur dudit signal indiquant le début réel dudit programme change avec le début dudit programme, et le magnétoscope est muni de quatrièmes moyens (2) couplés à ladite horloge, qui peuvent être activés afin de mettre en marche lesdits premiers moyens (15), ledit comparateur et lesdits troisièmes moyens à des seconds intervalles de temps prédéterminés lorsque ledit numéro de code n'a pas été détecté.

2. Système d'enregistrement automatique d'un programme de télévision selon la revendication 1, caractérisé par le fait que ledit signal indiquant le début du programme est un signal binaire du type non-oui, ledit signal étant non jusqu'au début réel du programme et devient oui au moment du début du programme.

3. Système d'enregistrement automatique d'un programme de télévision selon la revendication 1, caractérisé par le fait que ledit signal indiquant le début du programme est un signal indiquant le temps de début réel du programme, remis à jour en permanence.

4. Système d'enregistrement automatique d'un programme de télévision selon l'une quelconque des revendications précédentes, caractérisé par le fait que chaque fois que lesdits troisièmes moyens (12) sont mis en marche par lesdits quatrièmes moyens (2), ils permettent d'extraire du signal reçu ledit numéro de code et ledit signal indiquant le début du programme.

5. Système d'enregistrement automatique d'un programme de télévision selon la revendication 4, caractérisé par le fait que ledit numéro de code extrait dudit signal reçu est comparé au moyen dudit comparateur (2), avec le numéro de code stocké dans ladite mémoire de données (3), et, dans le cas où il correspond, lesdits quatrièmes moyens (2) permettent de garder en marche lesdits premiers (15) et troisièmes moyens (12), et ledit comparateur (2), tandis que dans le cas où il ne correspond pas, lesdits quatrièmes moyens (2) permettent d'arrêter lesdits premiers (15) et lesdits troisièmes moyens (12) et ledit comparateur (2).

6. Système d'enregistrement automatique d'un programme de télévision selon la revendication 5, dépendant de la revendication 2, caractérisé par le fait que, dans le cas où le numéro de code correspond, ledit signal binaire est vérifié en permanence et dès qu'il passe de non à oui, la partie restante du magnétoscope est mise en marche et l'opération d'enregistrement du programme commence.

7. Système d'enregistrement automatique d'un programme de télévision selon la revendication 6, caractérisé par le fait que lorsque le programme à enregistrer est passé, le numéro de code change, ledit signal d'indication change également et le magnétoscope s'arrête.

8. Système d'enregistrement automatique d'un programme de télévision selon la revendication 1, caractérisé par le fait que ledit premier intervalle de temps prédéterminé 1 et ledit second intervalle de temps 5 prédéterminé sont égaux.

9. Système d'enregistrement automatique d'un programme de télévision selon la revendication 1, caractérisé par le fait que lesdits intervalles de temps prédéterminés sont des intervalles d'une heure.

10. Système d'enregistrement automatique d'un programme de télévision, selon l'une quelconque des revendications précédentes, caractérisé par le fait que lesdits deuxièmes moyens (53) comprennent un clavier numéroté.

11. Système d'enregistrement automatique d'un programme de télévision selon la revendication 1, caractérisé par le fait que lesdits quatrièmes moyens comprennent un micro-ordinateur (2).

12. Système d'enregistrement automatique d'un programme de télévision selon la revendication 11, caractérisé par le fait que ledit micro-ordinateur (2) exécute également la fonction de comparateur de données.

13. Système d'enregistrement automatique d'un programme de télévision selon l'une quelconque des revendications précédentes, caractérisé par le fait que lesdits deuxièmes moyens (53) permettent de stocker dans ladite mémoire (3) un numéro indiquant la station émettrice souhaitée et ledit numéro de code indiquant le programme à enregistrer.

14. Système d'enregistrement automatique d'un programme de télévision selon la revendication 13, caractérisé par le fait que ledit numéro indiquant la station émettrice souhaitée est un nombre décimal à deux chiffres et par le fait que ledit numéro de code indiquant le programme à enregistrer est un nombre décimal à quatre chiffres.
